# FASCICULE DE BREVET EUROPEEN

(11) **EP 1 781 937 B1**
(45) Date de publication et mention de la délivrance du brevet: **22.04.2015**
(21) Numéro de dépôt: 05797558.3
(22) Date de dépôt: 10.08.2005
(51) Int. Cl.: F02N 11/08

(54) **PROCEDE D'INHIBITION DE LA COMMANDE D'ARRET AUTOMATIQUE DU MOTEUR THERMIQUE D'UN VEHICULE EN CAS D'ABSENCE DU CONDUCTEUR**
VERFAHREN ZUR HEMMUNG DES AUTOMATISCHEN STOPPSTEUERSYSTEMS EINER WÄRMEKRAFTMASCHINE IN EINEM FAHRZEUG BEI ABWESENHEIT DES FAHRERS
METHOD OF INHIBITING THE AUTOMATIC STOP CONTROL SYSTEM OF THE HEAT ENGINE OF A VEHICLE IN THE ABSENCE OF A DRIVER

(30) Priorité: 27.08.2004 FR 0451918
(43) Date de publication de la demande: 09.05.2007
(73) Titulaire: PEUGEOT CITROËN AUTOMOBILES S.A., 78140 Vélizy Villacoublay (FR)
(72) Inventeur: GUY, Jean-Emmanuel, F-78150 LE CHESNAY (FR); CELISSE, Arnaud, F-75017 PARIS (FR); KLEIN, Hervé, F-92300 LEVALLOIS PERRET (FR); LEVASSEUR, Guillaume, F-92000 NANTERRE (FR)
(86) Numéro de dépôt international: PCT/FR2005/050668
(87) Numéro de publication internationale: WO 2006/027514

(56) Documents cités:
- EP-A- 1 059 442
- EP-A- 1 416 142
- DE-B3- 10 211 463
- FR-A- 2 816 891
- US-A- 4 381 042
- PATENT ABSTRACTS OF JAPAN vol. 2000, no. 07, 29 septembre 2000 (2000-09-29) -& JP 2000 097067 A (TOYOTA MOTOR CORP), 4 avril 2000 (2000-04-04)

## Description

La présente invention concerne un procédé de commande de l'arrêt et du démarrage automatique d'un moteur thermique équipant un véhicule automobile ou routier.

La présente invention concerne plus particulièrement la non autorisation de l'arrêt ou du démarrage du moteur en cas de sortie du conducteur hors du véhicule.

Les constructeurs de véhicules équipés de moteurs thermiques, tels que les véhicules automobiles ou routiers, cherchent en permanence des solutions techniques susceptibles de réduire la consommation et les émissions de polluants de ces moteurs.

Parmi les différentes solutions développées à ce jour, il a été proposé un système provoquant l'arrêt automatique du moteur dans toutes les phases d'utilisation du véhicule où le fonctionnement du moteur n'est pas nécessaire, telles que les phases où le véhicule est momentanément à l'arrêt et où le moteur continue malgré tout de fonctionner au ralenti, puis opérant le démarrage automatique du moteur lorsque le conducteur souhaite faire repartir son véhicule.

Cette solution d'arrêt et de démarrage automatique des moteurs, encore appelée par les Anglo-saxons "Stop and Start" ou "Stop and Go", a un potentiel important de réduction de la consommation des moteurs car on estime qu'en moyenne, pour un trajet donné, un véhicule est à l'arrêt, moteur tournant au ralenti, pendant environ 20% du temps.

Un système "Stop and Start" comprend généralement un calculateur pour commander automatiquement l'arrêt et le démarrage du moteur thermique à partir d'informations appropriées sur le fonctionnement du véhicule. Ce calculateur comporte notamment des moyens aptes à identifier une phase de demande d'arrêt moteur, des moyens aptes à identifier une phase d'autorisation d'arrêt moteur pendant laquelle l'arrêt du moteur est effectivement possible et des moyens pour opérer l'arrêt effectif du moteur si les conditions "véhicule en phase de demande d'arrêt moteur" et "véhicule en phase d'autorisation d'arrêt moteur" sont réunies.

De la même manière un système "Stop and Start" comporte notamment des moyens aptes à identifier une phase de demande de démarrage moteur, des moyens aptes à identifier une phase d'autorisation de démarrage moteur pendant laquelle le démarrage du moteur est effectivement possible et des moyens pour opérer le démarrage effectif du moteur si les conditions "véhicule en phase de demande de démarrage moteur" et "véhicule en phase d'autorisation de démarrage moteur" sont réunies.

On appelle "phase de demande d'arrêt moteur" toute période temporelle pendant laquelle le conducteur marque sa volonté d'arrêter le moteur de son véhicule, le véhicule pouvant être arrêté ou encore roulant. Une telle volonté d'arrêt du moteur peut être caractérisée par différents critères, comme l'actionnement par le conducteur de la pédale de frein du véhicule.

On appelle "phase d'autorisation d'arrêt moteur" toute période pendant laquelle le fonctionnement du véhicule ne requière pas le fonctionnement du moteur et autorise donc son arrêt. Les conditions de fonctionnement du véhicule requérant le fonctionnement du moteur et ce, alors que le véhicule se trouve en phase de demande d'arrêt moteur, peuvent aussi bien concerner le fonctionnement même d'un équipement du véhicule que relever du seul agrément de conduite. Ces conditions s'opposant à l'arrêt du moteur sont caractérisées par des critères variés telle que par exemple la température de l'eau de refroidissement moteur inférieure à une valeur de seuil prédéterminée. En effet, un moteur doit atteindre une certaine température pour fonctionner de façon optimale, il n'est donc pas opportun de retarder la montée en température du moteur en l'arrêtant trop tôt après son démarrage.

On appelle "phase de demande de démarrage moteur" toute période temporelle pendant laquelle le fonctionnement du véhicule requière le démarrage du moteur. Les conditions de fonctionnement du véhicule requérant un tel démarrage se déduisent généralement des conditions s'opposant à l'arrêt du moteur.

On appelle "phase d'autorisation de démarrage moteur" toute période pendant laquelle le fonctionnement du véhicule n'interdit pas le démarrage du moteur. Les conditions de fonctionnement s'opposant à un démarrage peuvent être liées par exemple à l'état ouvert ou fermé de l'embrayage et/ou à l'état de la transmission, vitesse engagée ou non.

Le document WO-98/14702 décrit un système "Stop and Start". Ce système comprend une carte électronique qui commande l'arrêt ou le démarrage du moteur thermique à partir des informations fournies par deux capteurs :
- un capteur de position de la pédale d'embrayage ;
- un capteur de position du frein à main.

Si la pédale d'embrayage n'est pas enfoncée et si le frein à main est actionné, alors le moteur est arrêté automatiquement. Si la pédale d'embrayage est enfoncée et si le frein à main est relâché, alors le moteur est remis en route automatiquement.

Ce système utilise aussi un capteur de régime du moteur qui désactive la carte électronique si le régime du moteur est au-dessus d'un certain seuil et un capteur de température du moteur qui désactive également la carte électronique si le moteur n'a pas atteint sa température de fonctionnement.

Un tel système permet bien de réduire la consommation du moteur thermique en minimisant les phases de fonctionnement au ralenti du moteur. Toutefois, la réduction de consommation générée par un tel système ne semble pas particulièrement optimisée.

En effet, les phases de demande d'arrêt du moteur sont ici simplement limitées aux périodes d'actionnement du frein de parking. Quant aux phases d'autorisation de l'arrêt moteur, elles ne sont définies qu'à partir d'un nombre très limité de conditions de fonctionnement du véhicule s'opposant à l'arrêt du moteur, à savoir les fonctionnements "moteur froid" ou encore les fonctionnements à vitesse de rotation élevée.

Avec un tel système, tout arrêt du véhicule pour lequel il n'est pas procédé à l'actionnement du frein de parking n'entraîne donc aucun arrêt du moteur, or ce type d'arrêt représente une proportion importante des phases d'arrêt véhicule. En effet, les conducteurs tirent rarement le frein à main en situation d'arrêt temporaire, comme lors d'arrêts à des feux tricolores de signalisation.

Par ailleurs, la solution décrite dans le document WO98/14702 est purement matérielle. Par conséquent, sa complexité et notamment celle de la carte électronique croît rapidement lorsque augmente le nombre d'informations prises en compte pour opérer l'arrêt automatique du moteur.

La demande de brevet FR-A-2 816 891 déposée par la Demanderesse décrit un système "Stop and Start" plus perfectionné remédiant aux inconvénients des systèmes antérieurs en créant un système permettant de mettre en oeuvre des stratégies d'arrêt et de démarrage automatique du moteur sensiblement plus performantes.

Le système de commande de l'arrêt et du démarrage automatique d'un moteur thermique de véhicule objet de la demande FR-A-816891 comprend des moyens d'arrêt et de démarrage du moteur, des capteurs d'informations sur l'état du véhicule, des moyens de commande desdits moyens d'arrêt et de démarrage du moteur à partir des informations des capteurs et est caractérisé en ce que ces moyens de commande comportent un calculateur contenant un algorithme de commande dudit moteur agissant en fonction des données délivrées par lesdits capteurs d'informations.

Ce système permet donc de prendre en compte un plus grand nombre de situations de fonctionnement véhicule demandant l'arrêt du moteur et donc d'améliorer le gain en consommation généré par un plus grand nombre d'arrêts du moteur, tout en prenant en compte un plus grand nombre de conditions de fonctionnement du véhicule s'opposant à l'arrêt du moteur et ce, de façon notamment à limiter les éventuels impacts d'un arrêt du moteur sur le fonctionnement du véhicule et sur son agrément de conduite.

Un tel système permet ainsi de résoudre simplement des problèmes qui font appel à des stratégies de contrôle du moteur plus complexes prenant en compte un nombre important de conditions de fonctionnement du véhicule.

Il est toutefois apparu que de nouveaux progrès étaient encore nécessaires pour offrir une plus grande sécurité de fonctionnement du système.

En effet, dans tous les systèmes proposés à ce jour l'arrêt du moteur est maintenu quand le conducteur quitte le véhicule. Le véhicule se trouve alors déverrouillé, la clé de contact demeurant sur le tableau de bord dans sa position +APC, et prêt à redémarrer au moindre actionnement de la pédale d'accélérateur et ce, sans que le conducteur ait nécessairement pris conscience de la situation.

Une telle situation peut s'avérer dangereuse notamment vis-à-vis d'enfants susceptibles de venir s'installer au volant du véhicule. Cette situation peut également favoriser le vol du véhicule. JP 2000-97067 montre la prévention de l'arrêt de moteur en cas d'abscence du conducteur.

La présente invention vise donc à améliorer encore le procédé de commande de l'arrêt et du démarrage automatique d'un moteur en proposant un procédé de commande de l'arrêt et du démarrage d'un moteur qui offre une meilleure sécurité de fonctionnement notamment vis-à-vis des situations d'absence conducteur.

Le procédé selon l'invention concerne la commande de l'arrêt et du démarrage d'un moteur thermique équipant un véhicule du type selon laquelle il est nécessaire que le véhicule se trouve en phase de demande d'arrêt moteur et ne se trouve pas dans les conditions de fonctionnement prédéfinies s'opposant à l'arrêt du moteur pour que l'arrêt du moteur soit commandé ou qu'il est nécessaire que le véhicule se trouve en phase de demande de démarrage moteur et ne se trouve pas dans les conditions de fonctionnement prédéfinies s'opposant au démarrage du moteur pour que le démarrage du moteur soit commandé

Selon l'invention, le procédé de commande de l'arrêt et du démarrage d'un moteur thermique est caractérisé en ce que les situations de fonctionnement du véhicule s'opposant à l'arrêt du moteur comprennent l'absence du conducteur du véhicule.

Selon une autre caractéristique du procédé de commande objet de la présente invention, parmi les conditions de fonctionnement moteur définissant une phase de demande de démarrage du moteur figure la détection de l'absence du conducteur du véhicule.

Ainsi le redémarrage du moteur consécutif à la sortie du conducteur de l'habitacle à pour effet d'alerter ce dernier qui est alors à même de laisser ou non son véhicule moteur tournant, en parfaite connaissance de cause.

Selon une autre caractéristique du procédé de commande objet de la présente invention, dès lors que la durée d'absence du conducteur dépasse une valeur de seuil, l'absence du conducteur ne constitue plus une condition de fonctionnement s'opposant à l'arrêt du moteur et l'arrêt du moteur peut être commandé.

Selon une autre caractéristique du procédé de commande objet de la présente invention, dès lors que la durée d'absence du conducteur dépasse une valeur de seuil, l'absence du conducteur constitue une condition de fonctionnement s'opposant au démarrage du moteur et le démarrage du moteur ne peut plus être commandé.

Selon une autre caractéristique du procédé de commande objet de la présente invention, l'absence du conducteur est déduite de la position de la pédale de frein.

Selon une autre caractéristique du procédé de commande objet de la présente invention, l'absence du conducteur est déduite de la détection d'une ouverture de la porte du conducteur.

Selon une autre caractéristique du procédé de commande objet de la présente invention, l'absence du conducteur est déduite de la détection du débouclage de la ceinture de sécurité du conducteur.

Selon une autre caractéristique du procédé de commande objet de la présente invention, l'absence du conducteur est déduite de la détection d'un allégement détecté par un capteur équipant le siège conducteur.

Selon une autre caractéristique du procédé de commande objet de la présente invention, l'absence du conducteur est déduite d'une information délivrée par un capteur de présence conducteur spécifique équipant le véhicule.

Selon une autre caractéristique du procédé de commande objet de la présente invention, le fonctionnement du moteur suivant un démarrage consécutif à la détection de l'absence du conducteur est opéré pendant un laps de temps prédéterminé puis le moteur est arrêté si, à l'issue de ce laps de temps, le conducteur est toujours détecté absent.

Selon une autre caractéristique du procédé de commande objet de la présente invention, une fois arrêté le moteur ne peut alors plus être redémarré sauf à saisir un code prédéterminé.

Selon une autre caractéristique du procédé de commande objet de la présente invention, le redémarrage consécutif à la détection de l'absence conducteur s'accompagne du déclenchement de signaux d'avertissement sonores et/ou lumineux destinés à alerter le conducteur.

L'invention sera mieux comprise à la lecture de la description qui va suivre, donnée uniquement à titre d'exemple et faite en se référant aux dessins annexés sur lesquels :
- la figure 1 représente une architecture matérielle de l'ensemble du système de mise en oeuvre du procédé selon l'invention ;
- la figure 2 représente un organigramme schématique du procédé selon l'invention.

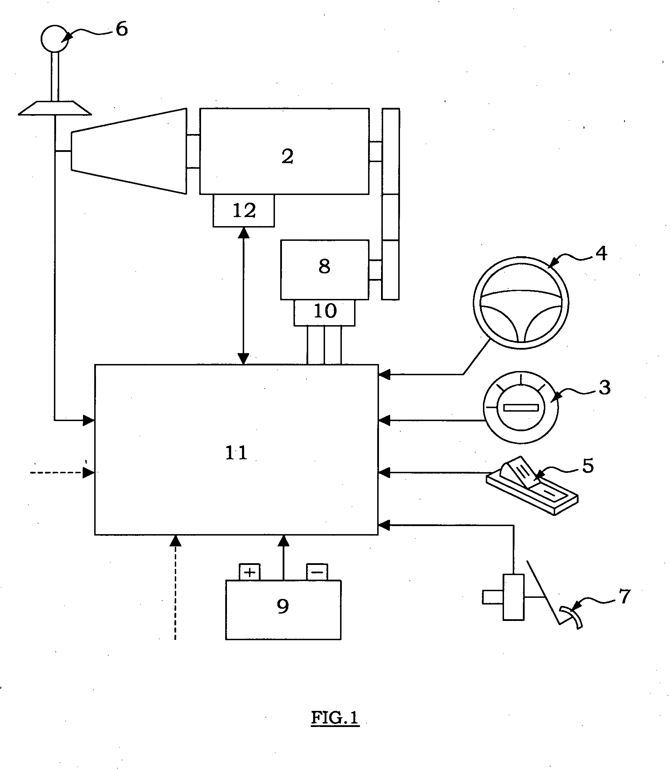

La figure 1 représente différents organes d'un véhicule automobile équipé d'un moteur thermique 2. Dans l'habitacle du véhicule, un commutateur 3 (avec ou sans clé) disposé à proximité du volant de direction 4 commande manuellement le démarrage ou l'arrêt du moteur 2 tandis qu'un moyen, tel qu'un commutateur à deux positions de type bouton poussoir 5, permet au conducteur d'activer ou d'inhiber le fonctionnement du véhicule en mode "Stop and Start", c'est-à-dire en mode d'arrêt et de démarrage automatique du moteur 2.

Le véhicule comporte par ailleurs un mécanisme de transmission dont le levier de changement de vitesses 6 est figuré ainsi qu'un dispositif de freinage commandé notamment par une pédale de frein 7.

Bien évidemment ces équipements ne sont pas limitatifs des autres équipements du véhicule qui n'ont pas été figurés tels que notamment un embrayage, un groupe moto-ventilateur pour refroidir le moteur 2, un dispositif de climatisation pour refroidir/chauffer l'habitacle ou encore un mécanisme de direction assistée, etc.

Le moteur thermique 2 est un moteur classique du type multi-cylindres à allumage commandé ou à allumage par compression (diesel). Ces types de moteur sont bien connus et ne seront donc pas détaillés plus avant. Le fonctionnement du moteur 2 est classiquement commandé par un calculateur de contrôle moteur 12 qui pilote notamment le débit de carburant.

Le moteur 2 coopère avec des moyens de démarrage appropriés telle qu'une machine électrique tournante réversible 8 formant alternato-démarreur. Une transmission de mouvement, par exemple par poulies et courroie, relie le rotor de l'alterno-démarreur 8 au vilebrequin du moteur 2.

Dans une variante de réalisation, le moteur 2 peut également coopérer avec un démarreur additionnel non figuré distinct de l'alterno-démarreur 8.

La machine 8 permet de transformer un mouvement de rotation du rotor inducteur, entraîné par le moteur thermique 2 du véhicule, en un courant électrique induit dans les bobinages du stator. Ce courant est alors destiné à alimenter en électricité le réseau de bord du véhicule et à charger la batterie 9 de ce véhicule.

La machine 8 peut également constituer un moteur électrique ou machine électrique tournante et entraîner en rotation, via l'arbre de rotor, le moteur thermique 2 du véhicule. Ainsi, l'alterno-démarreur 8 peut démarrer le moteur thermique 2 du véhicule automobile.

Cette machine 8 par exemple de type polyphasé fonctionne donc en alternateur pour, notamment, charger la batterie du véhicule et en démarreur pour entraîner le moteur à combustion interne, dit aussi moteur thermique, du véhicule automobile pour son démarrage. A cet effet, une unité de puissance connectée sur les phases de l'induit de l'alternateur sert de pont de commande de ces phases en mode moteur et fait office de pont redresseur lorsque l'alterno-démarreur 8 fonctionne en mode alternateur.

Une telle machine 8 est bien connue en elle-même et ne sera pas détaillée plus avant. Le document FR2842041 décrit par exemple une telle machine.

Le système mettant en oeuvre le procédé de commande automatique de l'arrêt et du démarrage du moteur selon l'invention comprend un calculateur 11 qui pilote via les calculateurs 10 et 12 le fonctionnement de la machine 8 et l'arrêt et le démarrage du moteur 2 et ce, à partir d'un certain nombre d'informations concernant le fonctionnement du véhicule.

Le calculateur 11 coopère en effet avec des capteurs d'information appropriés aptes à fournir en plus de la position du commutateur 3 ou du bouton 5, les informations requises sur le fonctionnement du véhicule telle que la vitesse de rotation du moteur 2, la vitesse du véhicule, la distance parcourue, la position de la pédale d'embrayage, la position de la pédale d'accélérateur, la position du levier de changement de vitesses 6, la position de la pédale de frein 7 et celle du levier de frein à main, le rapport de vitesse enclenchée dans la boîte de vitesses, la température d'eau de refroidissement du moteur, l'état de charge de la batterie 9, l'état de la climatisation, le couple exercé par le conducteur sur le volant, etc.

Le calculateur 11 selon l'invention dispose en particulier de l'information logique "présence conducteur" (et par conséquent "absence conducteur") fournit par des moyens appropriés non figurés. Ces moyens peuvent être un capteur d'ouverture de la porte du conducteur ou un capteur de débouclage de la ceinture de sécurité du conducteur ou un capteur de poids équipant le siège conducteur ou bien encore tout capteur de présence conducteur spécifique équipant le véhicule. Le calculateur 11 est sensible non seulement à la valeur de l'information mais également à sa transition d'un état à l'autre, transition indiquant le départ ou l'arrivée du conducteur.

Selon un mode particulier de réalisation de l'invention, le conducteur est déclaré présent lorsque que les conditions suivantes sont observées : la pédale de frein est appuyée ou bien si la ceinture conducteur est bouclée et la porte conducteur est fermée. De sorte que le conducteur est déclaré absent si : la pédale de frein n'est pas appuyée et la ceinture conducteur est débouclée ou la porte conducteur est ouverte.

Il est important de remarquer que le calculateur 11 au sens de la présente invention est défini de façon plus générale comme étant tout système dans lequel peut être implanté un algorithme de commande à l'aide de moyens de programmation et contenant au moins une mémoire. Un réseau logique programmable du type ASIC pourrait être utilisé. Ce calculateur 11 peut être spécifique comme illustré ou bien encore être intégré à un autre calculateur comme, par exemple, les calculateurs 10 ou 12 ou bien encore intégré dans plusieurs calculateurs.

Le calculateur 11 opère une surveillance constante du fonctionnement du véhicule à partir d'un certain nombre d'informations transmises directement par des capteurs appropriés ou par l'intermédiaire d'autres calculateurs auxquels le calculateur 11 est connecté et, le moteur étant tournant, il en vérifie si le véhicule se trouve ou non en phase de demande d'arrêt moteur et en phase d'autorisation d'arrêt moteur et en déduit l'arrêt du moteur. De la même façon, le moteur étant arrêté, le calculateur 11 vérifie à partir des informations reçues si le véhicule se trouve ou non en phase de demande de démarrage et en phase d'autorisation du démarrage moteur et en déduit le démarrage du moteur.

Les phases de demande d'arrêt moteur sont définies par des critères de fonctionnement véhicule appropriés combinant le fait que le bouton 5 se trouve en position "non inhibé" et que notamment l'un des critères suivants soit observé :
- la position de la pédale de frein passe de "non appuyée" à "appuyée";
- le levier de vitesses est au neutre.

Pour ce qui est des phases d'autorisation d'arrêt moteur, elles sont définies à partir d'un certain nombre de critères identifiant des conditions de fonctionnement véhicule prédéfinies s'opposant à l'arrêt du moteur 2.

On pourra distinguer différents types de condition de fonctionnement véhicule susceptibles de définir ces phases d'autorisation :
- des conditions liées au véhicule proprement dit tels que les besoins moteur (température d'eau, etc.), les besoins d'assistance freinage, les besoins du réseau électrique de bord, les besoins thermiques habitacles, etc.;
- des conditions liées à l'agrément de conduite tels que des manoeuvres de parking, etc.;
- des conditions liées au conducteur.

Pour ce qui est des phases de demande de démarrage, elles se déduisent sensiblement des conditions s'opposant à l'arrêt du moteur.

Quant aux conditions s'opposant aux demandes de démarrage, elles comprennent notamment des situations liées à la transmission telle que l'existence d'une vitesse enclenchée.

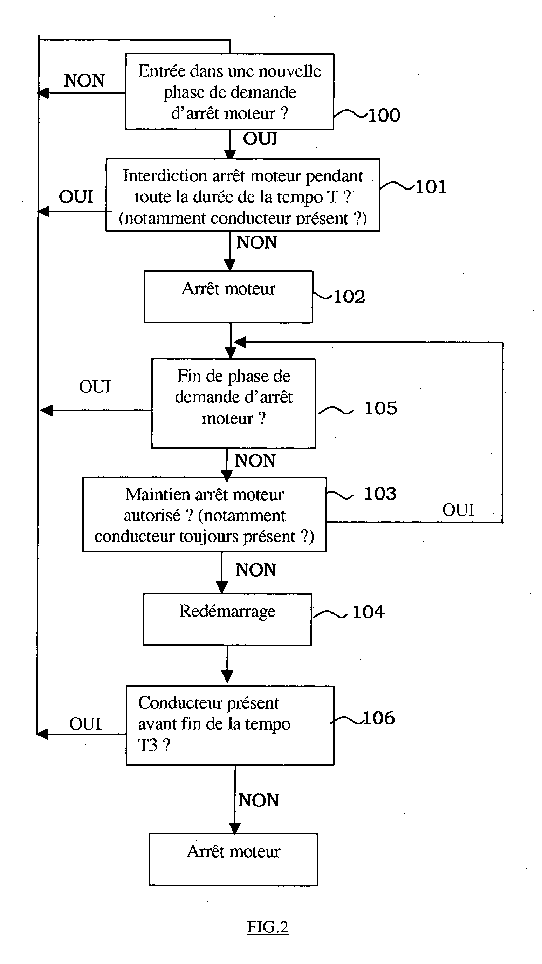

La figure 2 représente un exemple d'algorithme de commande mettant en oeuvre le procédé selon l'invention et contenu dans les mémoires électroniques du calculateur 11.

Il est à noter que l'architecture logicielle utilisée pour coder l'algorithme peut se décomposer en deux modules.

Un premier module appelé logiciel de bas niveau regroupe les commandes relatives à l'architecture matérielle utilisée telles que la lecture d'un signal sur l'une des entrées du microcontrôleur ou l'émission d'un signal de sortie. Ce logiciel de bas niveau est propre au microcontrôleur utilisé. Le second module appelé logiciel de haut niveau, est lui spécifique à l'application réalisée.

Dans la présente invention, le second module est utilisé pour implanter la stratégie de gestion des démarrages et des arrêts automatiques du moteur. Il est réalisé dans un langage de programmation tel que le langage C.

Une fois le moteur démarré et dans le cas où le commutateur 4 est dans la position dans laquelle la fonction d'arrêt automatique du moteur est activée, le calculateur 11 scrute régulièrement l'état de fonctionnement du moteur à partir des informations collectées et déroule donc de façon itérative les étapes ci-dessous.

Lors de l'étape de test 100, le calculateur 11 vérifie si véhicule est entré dans une nouvelle phase de demande d'arrêt moteur.

Une phase de demande d'arrêt est par exemple identifiée si le conducteur appuie sur la pédale de frein et/ou s'est mis au point mort (levier de vitesses en position neutre ou point mort) et que le bouton 5 est en position d'activation ou "non inhibé".

Lorsqu'une nouvelle phase de demande d'arrêt du moteur a été identifiée et pendant tout le temps que va durer cette phase de demande d'arrêt c'est-à-dire tout le temps que le conducteur garde son pied appuyé sur la pédale de frein et/ou demeure au point mort et que le bouton 5 est en position d'activation, le calculateur vérifie ensuite si le véhicule se trouve en phase d'autorisation d'arrêt moteur ou non et ce lors de l'étape 101.

L'arrêt effectif du moteur n'est, en effet, commandé que si les conditions de fonctionnement du véhicule le permettent c'est-à-dire si le véhicule ne se trouve pas dans l'une quelconque des conditions prédéterminées pour lesquelles l'arrêt du moteur n'est pas autorisé.

Les conditions n'autorisant pas l'arrêt du moteur sont donc une à une testées au cours de l'étape 101. L'étape 101 consiste donc en une série de tests distincts, susceptible de caractériser chacun un fonctionnement du véhicule pour lequel l'arrêt du moteur n'est pas autorisé. Parmi les conditions de fonctionnement du véhicule s'opposant à l'arrêt du moteur figure l'absence conducteur (c'est-à-dire la non présence conducteur). Cette condition est donc testée lors de l'étape 101.

Si au moins une des conditions de fonctionnement du moteur s'opposant à l'arrêt du moteur se trouve vérifiée alors le moteur n'est pas arrêté et le moteur ne sera pas arrêté pendant toute la durée de la phase présente de demande d'arrêt véhicule même si la condition n'autorisant pas initialement l'arrêt vient à disparaître avant la fin de cette phase de demande d'arrêt. Le processus s'arrête donc là et l'on revient à l'étape 100.

Dans la variante de réalisation représentée à la figure 2, on pourra également autoriser un arrêt si la condition n'autorisant pas initialement l'arrêt du moteur vient à disparaître avant un laps de temps ou temporisation T comptée à partir de l'entrée en phase d'arrêt du véhicule. Cette temporisation T calibrée en fonction du moteur et du véhicule concernés est généralement comprise entre deux et dix secondes.

Il est possible de décider d'arrêter malgré tout le moteur si l'absence conducteur se prolonge au-delà d'une durée de seuil T1 et ce, notamment pour préserver les ressources en carburant du véhicule ou bien encore par mesure de sécurité. Cette valeur de temps calibrée T1 est généralement comprise entre cinq et vingt minutes.

Ainsi, une absence conducteur d'une durée supérieure à T1 n'est plus une condition de fonctionnement du véhicule s'opposant à l'arrêt du moteur.

Si, à l'opposé, l'étape 101 révèle que le véhicule ne se trouve dans aucune des conditions de fonctionnement du véhicule s'opposant à l'arrêt du moteur c'est-à-dire que le véhicule se trouve en phase d'autorisation d'arrêt moteur, alors le moteur est arrêté lors de l'étape 102.

Par la suite, lors d'une nouvelle étape de test 103, étape réitérée jusqu'à la fin de la présente phase de demande d'arrêt du moteur elle-même déterminée à l'étape de test 105, le calculateur vérifie l'état du véhicule et détermine si les conditions de fonctionnement du véhicule autorisent toujours le maintien à l'arrêt du moteur ou si au contraire elles définissent une phase de demande de démarrage du moteur.

L'arrêt effectif du moteur n'est, en effet, maintenu que si les conditions de fonctionnement du véhicule le permettent c'est-à-dire si le véhicule ne se trouve pas dans l'une ou l'autres des conditions prédéterminées pour lesquelles le démarrage du moteur est requis.

Les conditions requérant le démarrage du moteur sont donc une à une vérifiées à l'étape 103 de façon similaire à l'étape 101, les conditions requérant le démarrage du moteur étant par ailleurs sensiblement les mêmes que celles s'opposant à l'arrêt du moteur, elles ne seront donc pas détaillées plus avant.

Si une condition de fonctionnement requérant le démarrage du moteur survient et en particulier si l'absence conducteur est détectée et si aucune condition ne s'oppose à ce redémarrage alors celui-ci est redémarré à l'étape 104.

Dans le cas particulier d'une condition d'absence conducteur, le redémarrage du moteur 2 doit de préférence s'opérer immédiatement après la détection de l'absence conducteur. En effet, si le démarrage ne peut avoir lieu rapidement, c'est-à-dire avant un laps de temps T2 décompté après le départ conducteur, il peut être souhaitable pour des raisons de sécurité de ne pas procéder au démarrage. Dans ce cas l'absence conducteur d'une durée supérieure à T2 devient une condition s'opposant au démarrage du moteur. Cette valeur de temps calibrée T2 est généralement comprise entre une et vingt minutes.

Ce redémarrage immédiat sitôt détecté le départ du conducteur, départ caractérisé par la transition "présence conducteur" / "absence conducteur", est à même d'informer pleinement le conducteur de la situation car ce dernier se trouve alors encore dans l'habitacle ou à proximité immédiate du véhicule et est donc sensible au démarrage du moteur thermique.

Il est à noter qu'en variante il est possible en plus de ce redémarrage moteur d'opérer des avertissements sonores ou lumineux spécifiques pour alerter encore mieux le conducteur.

Le moteur ainsi démarré peut être arrêté après un laps de temps ou temporisation T3 prédéterminé si le conducteur ne revient pas et ce, notamment pour préserver les ressources en carburant du véhicule ou bien encore par mesure de sécurité. Cette valeur de temps calibrée T3 est généralement comprise entre une et vingt minutes. Cette condition est testée à l'étape 106.

Il peut également être programmé de ne pouvoir alors redémarrer le moteur ainsi arrêté après un laps de temps donné qu'après une opération préalable de reconnaissance du conducteur comme par exemple la saisie d'un code secret approprié et ce, par exemple à partir d'une manipulation appropriée des commandes conducteur telle qu'une alternance prédéterminée d'enfoncement des pédales d'accélérateur et de frein.

## Revendications

1. Procédé de commande de l'arrêt et du démarrage d'un moteur thermique (2) équipant un véhicule du type selon lequel il est nécessaire que le véhicule se trouve en phase de demande d'arrêt moteur et ne se trouve pas dans les conditions de fonctionnement prédéfinies s'opposant à l'arrêt dudit moteur (2) pour que l'arrêt du moteur (2) soit commandé ou qu'il est nécessaire que le véhicule se trouve en phase de demande de démarrage moteur et ne se trouve pas dans les conditions de fonctionnement prédéfinies s'opposant au démarrage dudit moteur (2) pour que le démarrage du moteur soit commandé, dans lequel lesdites conditions de fonctionnement du véhicule s'opposant à l'arrêt du moteur comprennent l'absence du conducteur du véhicule, en ce que parmi les conditions de fonctionnement moteur définissant une phase de demande de démarrage figure la détection de l'absence du conducteur du véhicule, et dès lors que la durée d'absence du conducteur dépasse une première valeur de seuil (TI), l'absence du conducteur ne constitue plus une condition de fonctionnement s'opposant à l'arrêt du moteur et l'arrêt du moteur peut être commandé, **caractérisé en ce que**, dès lors que la durée d'absence du conducteur dépasse une seconde valeur de seuil (T2), l'absence du conducteur constitue une condition de fonctionnement s'opposant au démarrage du moteur et le démarrage du moteur ne peut plus être commandé.

2. Procédé de commande selon la revendication 1, **caractérisé en ce que** l'absence du conducteur est déduite de la position de la pédale de frein (7).

3. Procédé de commande selon l'une quelconque des revendications 1 et 2, **caractérisé en ce que** l'absence du conducteur est déduite de la détection d'une ouverture de la porte du conducteur.

4. Procédé de commande selon l'une quelconque des revendications 1 à 3 **caractérisé en ce que** l'absence du conducteur est déduite de la détection du débouclage de la ceinture de sécurité du conducteur.

5. Procédé de commande selon l'une quelconque des revendications 1 à 4 **caractérisé en ce que** l'absence du conducteur est déduite de la détection d'un allégement détecté par un capteur équipant le siège conducteur.

6. Procédé de commande selon l'une quelconque des revendications 1 à 5, **caractérisé en ce que** l'absence du conducteur est déduite d'une information délivrée par un capteur de présence conducteur spécifique équipant le véhicule.

7. Procédé de commande selon la revendication 1, **caractérisé en ce que** le fonctionnement du moteur (2) suivant un démarrage consécutif à la détection de l'absence du conducteur est opéré pendant un laps de temps prédéterminé puis le moteur (2) est arrêté si, à l'issue de ce laps de temps, le conducteur est toujours détecté absent.

8. Procédé de commande selon la revendication 7, **caractérisé en ce qu'**une fois arrêté le moteur ne peut alors plus être redémarré sauf à saisir un code prédéterminé.

9. Procédé de commande selon l'une quelconque des revendications 1 à 8, **caractérisé en ce que** le redémarrage consécutif à la détection de l'absence conducteur s'accompagne du déclenchement de signaux d'avertissement sonores et/ ou lumineux destinés à alerter le conducteur.

## Patentansprüche

1. Steuerverfahren des Stoppens und des Anlassens einer Wärmekraftmaschine (2), die ein Fahrzeug ausstattet, des Typs, bei dem es erforderlich ist, dass sich das Fahrzeug in Maschinenstoppanfragephase befindet und nicht in den vorbestimmten Betriebsbedingungen befindet, die sich dem Stoppen der Maschine (2) widersetzen, damit das Stoppen der Maschine (2) gesteuert wird, oder dass es erforderlich ist, dass sich das Fahrzeug in Maschinenanlassanfragephase befindet und sich nicht in den vorbestimmten Betriebsbedingungen befindet, die sich dem Anlassen der Maschine (2) widersetzen, damit das Anlassen der Maschine gesteuert wird, bei welchen die Betriebsbedingungen des Fahrzeugs, die sich dem Anlassen der Maschine widersetzen, die Abwesenheit des Fahrers des Fahrzeugs umfassen, dass sich unter den Maschinenbetriebsbedingungen, die eine Anlassanfragephase definieren, das Erfassen der Abwesenheit des Fahrers des Fahrzeugs befindet, und, sobald die Abwesenheitsdauer des Fahrers einen ersten Schwellenwert (T1) überschreitet, die Abwesenheit des Fahrers keine Betriebsbedingungen mehr bildet, die sich dem Stoppen der Maschine widersetzen und das Stoppen der Maschine gesteuert werden kann, **dadurch gekennzeichnet, dass**, sobald die Abwesenheitsdauer des Fahrers einen zweiten Schwellenwert (T2) überschreitet, die Abwesenheit des Fahrers eine Betriebsbedingung bildet, die sich dem Anlassen der Maschine widersetzt und das Anlassen der Maschine nicht mehr gesteuert werden kann.

2. Steuerverfahren nach Anspruch 1, **dadurch gekennzeichnet, dass** die Abwesenheit des Fahrers aus der Position des Bremspedals (7) abgeleitet wird.

3. Steuerverfahren nach einem der Ansprüche 1 und 2, **dadurch gekennzeichnet, dass** die Abwesenheit des Fahrers aus dem Erfassen eines Öffnens der Tür des Fahrers abgeleitet wird.

4. Steuerverfahren nach einem der Ansprüche 1 bis 3, **dadurch gekennzeichnet, dass** die Abwesenheit des Fahrers aus dem Erfassen des Öffnens des Sicherheitsgurts des Fahrers abgeleitet wird.

5. Steuerverfahren nach einem der Ansprüche 1 bis 4, **dadurch gekennzeichnet, dass** die Abwesenheit des Fahrers aus dem Erfassen eines Leichterwerdens, das von einem Sensor, der den Fahrersitz ausstattet, erfasst wird, abgeleitet wird.

6. Steuerverfahren nach einem der Ansprüche 1 bis 5, **dadurch gekennzeichnet, dass** die Abwesenheit des Fahrers aus einer Information abgeleitet wird, die von einem spezifischen Fahrergegenwartssensor, der das Fahrzeug ausstattet, geliefert wird.

7. Steuerverfahren nach Anspruch 1, **dadurch gekennzeichnet, dass** das Funktionieren der Maschine (2) im Anschluss an ein Anlassen infolge der Erfassung der Abwesenheit des Fahrers während einer vorbestimmten Zeitspanne betätigt wird, die Maschine (2) dann gestoppt wird, falls nach dieser Zeitspanne der Fahrer immer noch als abwesend erfasst wird.

8. Steuerverfahren nach Anspruch 7, **dadurch gekennzeichnet, dass**, sobald die Maschine gestoppt ist, sie nicht mehr neu angelassen werden kann, außer wenn ein vorbestimmter Code eingegeben wird.

9. Steuerverfahren nach einem der Ansprüche 1 bis 8, **dadurch gekennzeichnet, dass** das Neuanlassen im Anschluss an das Erfassen der Abwesenheit des Fahrers vom Auslösen von akustischen und/oder Lichtwarnsignalen, die dazu bestimmt sind, den Fahrer zu warnen, begleitet ist.

## Claims

1. A method of controlling the stopping and starting of a heat engine (2) with which a vehicle is equipped, of the type according to which it is necessary that the vehicle be in the engine stop request phase and not in the predefined operating conditions opposed to the stopping of said engine (2) for the stopping of the engine (2) to be controlled, or it is necessary that the vehicle be in engine start request phase and not in the predefined operating conditions opposed to the starting of said engine (2) for the starting of the engine to be controlled, wherein said operating conditions of the vehicle opposed to the stopping of the engine include the absence of the driver from the vehicle, in that amongst the engine operating conditions defining a start request phase is the detection of the absence of the driver from the vehicle, and as soon as the duration of the absence of the drive exceeds a first threshold value (T1), the absence of the driver does not constitute any longer an operating condition opposed to the stopping of the engine and the stopping of the engine can be controlled, **characterized in that** as soon as the duration of the absence of the driver exceeds a second threshold value (T2), the absence of the driver constitutes an operating condition opposed to the starting of the engine and the starting of the engine can no longer be controlled.

2. The control method according to Claim 1, **characterized in that** the absence of the driver is deduced from the position of the brake pedal (7).

3. The control method according to any one of Claims 1 and 2, **characterized in that** the absence of the driver is deduced from the detection of an opening of the driver's door.

4. The control method according to any one of Claims 1 to 3, **characterized in that** the absence of the driver is deduced from the detection of the unfastening of the driver's safety belt.

5. The control method according to one of Claims 1 to 4, **characterized in that** the absence of the driver is deduced from the detection of a lightening detected by a sensor with which the driver's seat is equipped.

6. The control method according to any one of Claims 1 to 5, **characterized in that** the absence of the driver is deduced from information supplied by a specific driver presence sensor with which the vehicle is equipped.

7. The control method according to Claim 1, **characterized in that** the operation of the engine (2) following a start subsequent to the detection of the absence of the driver is performed during a predetermined time period, then the engine (2) is stopped if, at the end of this time period, the driver is still detected to be absent.

8. The control method according to Claim 7, **characterized in that** once the engine has been stopped, it can no longer be re-started except if a predetermined code is entered.

9. The control method according to any one of Claims 1 to 8, **characterized in that** the re-starting subsequent to the detection of the absence of the driver is accompanied by the triggering of sound and/or light warning signals intended to alert the driver.
